# EUROPEAN PATENT SPECIFICATION

(11) **EP 3 315 238 B1**
(45) Date of publication and mention of the grant of the patent: **11.03.2020**
(21) Application number: 17193650.3
(22) Date of filing: 28.09.2017
(51) Int. Cl.: B23K 9/095, B23K 9/10, B23K 9/29, B23K 9/32, G01D 5/353, G01B 11/16, G01V 1/38

(54) **WELDING PROCESS CONTROL SYSTEM FOR REAL-TIME TRACKING OF THE POSITION OF THE WELDING TORCH BY THE USE OF FIBER BRAGG GRATING BASED OPTICAL SENSORS ; USE OF SUCH SYSTEM**
SCHWEISSPROZESSSTEUERUNGSSYSTEM ZUM ECHTZEIT-FOLGEN VON DER POSITION EINES SCHWEISSBRENNER UNTER VERWENDUNG VON FASER-BRAGG-GITTER BASIERENDEN, OPTISCHEN SENSOREN ; VERWENDUNG EINES SOLCHEN SYSTEM
SYSTEME DE CONTROLE D'UN PROCEDE DE SOUDAGE AVEC SUIVI EN TEMPS REEL DE LA POSITION D'UNE TORCHE DE SOUDAGE EN UTILISANT DES CAPTEURS OPTIQUES A BASE DE RESEAU DE BRAGG A FIBRES ; UTILISATION D'UN TEL SYSTEME

(30) Priority: 06.10.2016 TR 201614048
(43) Date of publication of application: 02.05.2018
(73) Proprietor: Konukseven, Erhan Ilhan, 06800 Ankara (TR)
(72) Inventor: KONUKSEVEN, Erhan Ilhan, 06800 ANKARA (TR)
(74) Representative: Kayahan, Senem

(56) References cited:
- US-A1- 2009 298 024
- US-A1- 2010 014 072
- US-A1- 2010 224 610
- US-A1- 2012 321 243
- US-A1- 2013 183 645
- US-A1- 2016 267 806

## Description

### Technical Field of the Invention

The invention of the application is related to the estimation and/or control of the welding quality depending on the time-based position information obtained by using a fiber bragg grating based optical sensor system connected to the welding torch. In particular, the present invention relates to a welding process control system according to the preamble of claim 1 (see for example US 2010/224610 A1), and to the use of such system, see claim 3.

### Background of the Invention (Prior Art)

The current systems are used for obtaining elongation (strain) and temperature profiles of fiber optic sensors in the welding field. In the industry, nondestructive testing methods are commonly used for welding quality control. In this method, in addition to the inherent limitations (the penetration test can only detect surface defects, the magnetic particle test can only be used with magnetic materials etc.), the cost of the application is high and increases with precision.

Systems that try to catch a parameter-quality correlation by logging welding parameters are commonly used. Welding instructions that are used in welding engineering are directed to control these parameters. However, during the quality control performed by tracking the weld parameters only in the welds performed manually, and not considering the welder-originated position and velocity differences of the torch relative to the work piece causes uncertainties regarding the welding quality.

In the literature, especially in the robotic welding systems related parameters are controlled in real-time, however this application cannot determine the effect of the operator (thus, the position of the torch) on weld quality during the welding operations performed manually.

Other quality control systems that work with "Fiber Bragg Grating (FBG)" aim to establish a correlation with weld quality based on the temperature changes and deformations caused by the welding operation by utilizing the reactions of the reflective indices of the fibers against temperature and the amount of elongation in which they are subjected to.

In the performed studies, the fibers are directly located on the plates to be welded, however since the reflective indices of the fibers change simultaneously with both the elongation of the plates and the temperature changes and since the welding defects are hard to determine just by these two variables, a system that can directly detect the weld quality by the FBG technique has not been developed yet.

Patent application Numbered JPS 61189975 (A) is related to the invention subject matter. Said patent application is related to perform profiling by a profile sensor that determines line boundaries on parallel lines and relates to weld torch creating a straight line. The welding robot comprises an optical profile sensor having a fiber optical sensor and a pair of illuminating part is arranged parallel to the welding direction of the torch. The position on the illuminating parts that record the lines defined on the weld line is regarded as the central position by the control system. In case of deviation, the torch and the sensor are held on the central position.

Patent application Numbered JPH 1190658 (A) is related to the invention subject matter. Said patent application is related to welded pipes having excellent quality production capacity and related to obtaining a production device for welded pipes where the tip position and the temperature of the pre-heated edge part can be optically detected. The light source comprises a light bulb that emits a light beam having a density at the wavelength light component. The filter and the light are directed to the optical tip by the fiber optic. The first image receiving device that detects the position of the seam and the second image receiving device that detects the temperature of the pre-heated edge are positioned between the high frequency heater and the laser beam torch.

### Brief Description and Objects of the Invention

The invention of this application is related to the estimation and/or control of the weld quality depending on the time-based position information obtained by using a fiber bragg grating based optical sensor system that is connected to the welding torch.

In addition to weld parameter tracking, the fibers on which fiber bragg grating is applied are directly positioned on the cable of the weld torch. Thus, it is possible to detect the spatial coordinates of the weld torch in real-time with respect to the work piece to be welded. The position data of the weld torch and the parameter records received during the welding operation are compared to a database that contains parameters and torch position information that is prepared by weld tests. It is envisaged to control the quality or to increase the welding quality by guiding the operator depending on the obtained results. The database can be expanded depending on the quality results obtained from both theoretically and the tested pieces. The same system can also be used as a guide for the operator to perform welding with the correct position and velocity as well as consistency of the quality control on welds performed manually.

The novelty of the invention is that the position and velocity of the weld torch (weld electrode) is continuously monitored by the FBG sensors mounted thereon which directly affect the weld quality as well as recording the weld parameters such as current, voltage, gas flow rate and wire speed that affect the welding performance of the welds performed manually. Thus, the torch positioning errors that may cause welding defects will be recorded and also it will be recorded if all the welding jobs defined for each weld point on the work piece are performed in accordance with the technical specification. At the same time, it may guide the operator by a real-time feed-back. The proposed method is a technical solution to welding quality control problem.

In order to achieve the objects of the invention mentioned above that can become apparent from the detailed description given below, the present invention defines a welding process control system according to claim 1, and the use of such system according to claim 3.

A preferred embodiment of the invention has a structure that can record motions of the torch along with the current, voltage, gas flow rate and wire speed parameters that affect manual weld performance, that can guide the operator by using one or more of the sensing methods such as visual, audio or tactile methods and that can improve the weld quality.

### Brief Descriptions of the Figures

The figure that is prepared to provide a better understanding of the welding process control system using fiber bragg grating based optical sensors, which developed by this invention is described below.

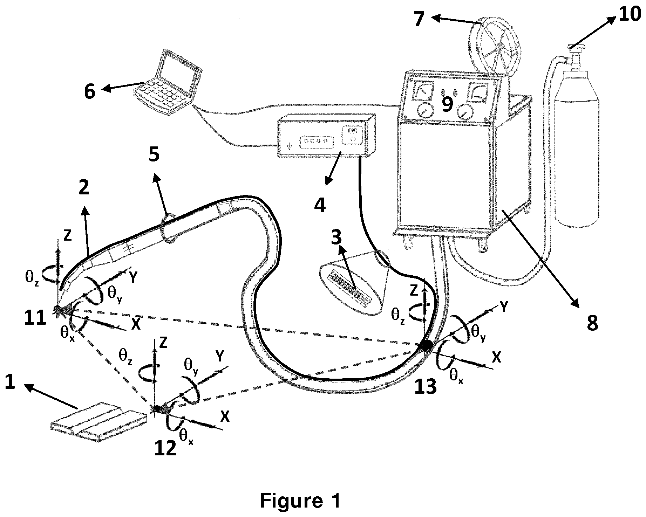

Figure 1-Welding process control system by fiber bragg grating based optical sensors

### Descriptions of the Parts/ Components/ Elements Forming the Invention

In order to provide a better understanding of the welding process control system developed in this invention using fiber bragg grating based optical sensors the parts/components/elements in the drawing are individually given reference numbers and these numbers refer to:
**1.** Work piece
**2.** Weld torch
**3.** Optical Fibers Produced by Fiber Bragg Grating Method
**4.** Fiber Bragg light source and shape detection sensor device
**5.** Current - Voltage Sensor
**6.** Computer used for collection, evaluation and real-time feed-back of the weld parameter and torch position data
**7.** Wire Feeding Unit and Speed Sensor
**8.** Welding Machine
**9.** Welding process parameters data acquisition system
**10**. Gas Tank and the Sensor
**11**.Torch (welding wire) tip coordinate axis
**12.**Work piece coordinate axis
**13.** Reference coordinate axis

### Detailed Description of the Invention

The invention subject matter of the application is related to estimation and/or to the controlling of welding quality depending on time-based position information obtained by means of the fiber bragg grating based optical sensor system connected to the welding torch (2). Said welding process control system with fiber bragg grating based optical sensors comprise; the work piece (1) on which the welding operation is performed, the weld torch (2) which conveys the electric current and the welding gas (9) coming from the welding machine (8) during the arc weld to the region where the welding operation is performed, the optical fibers (3) produced by fiber bragg grating method of which the reflectivity change depending on the changes in elongation, the sensor device (4) that provides the wide spectrum light source that emits the light at different wavelengths to be projected on the fibers (3), the shape detection sensor device (4) that shows the spatial position of the torch (2) where the fibers (3) are mounted on by detecting the wavelengths reflected from the fibers (3), the current - voltage sensor (5) that measures the parameter output values of the welding machine (8), the welding process parameter data collector (9) which is the electronic unit where the data from the sensors are collected, the portable computer (6) in which the data from the shape detection sensor system and the welding parameter records are collected and recorded, the wire feeding unit and the speed sensor (7) that feeds the welding wire at a pre-determined speed and that measures the wire speed, the welding machine (8) that generates the electrical current for the arc welding, the gas sensor (10) that comprises the gas tank which contains the welding gas and that measures the flow rate of the welding gas, the torch (welding wire) tip coordinate axis (11), the work piece coordinate axis (12) and the reference coordinate axis (13).

The Fiber Bragg grating position sensor (3) is directly placed on the cable of the welding torch (2). Thus, real-time detection of the spatial coordinate axis (11) of the welding torch (2) relative to the coordinate axis (12) of the work piece (1) will be possible as well as real-time monitoring of the welding process parameters. The position information of the welding torch (2) and the parameter data received during the welding operation are compared to a database that contains torch (2) position information and parameters that are prepared by welding tests. The welding quality is estimated depending on the obtained results. The database can be expanded depending on the quality results obtained both theoretically and obtained from the tested pieces.

In the manual welding operations performed on the work piece (1), what is controlled by the operator is the movement of the welding torch (2). In order to assure the quality of the weld, welding instructions are used by the welding engineers. These instructions are established based on the application parameters of the welding seams of which the quality levels are recorded during trials. Before starting welding operations performed manually, the parameters are determined depending on these instructions.

The welding process parameters are the current - voltage values measured by the current - voltage sensor (5) provided by the welding machine and the arc characteristic curves, the welding wire feeding speed fed from the wire feeding unit (7) and the flow rate of the gas coming from the gas tank (10). In the proposed system, all of these welding parameter values are transferred from the sensors to the welding machine data acquisition system (9).

Besides all the values mentioned above, one of the parameters that directly affect the weld bonding quality in welding operations is the time-based position of the welding torch (2). The Fiber Bragg grating position sensor is used on the torch. The spatial time-based position of the torch (2), along with the other recorded welding parameters, is used to detect the weld quality through the Fiber Bragg grating shape detection sensor device (4). Values such as long or short arc formation, angle of approach, welding speed etc. directly affect the welding performance. The time-based position of the welding torch (2) has to be tracked in order to measure these values and estimate the welding quality. In order to achieve this, the torch cable is equipped with at least three (or three core) optical fibers (3) that are produced by Fiber Bragg grating method to measure three-dimensional elongation levels. These optical fibers (3) are subjected to stress and thus to elongation (strain) in any movement of the torch (2). These elongations change the reflectivity indices of the fibers (3). The modulated light (3) is partially reflected since optical fibers reflectivity indices change under stress (exposure). The extent of the change in the reflectivity indices of the fibers (3) are mathematically found by measuring the reflected wave lengths via the shape detecting sensor device (4). Based on this information, the elongation of the fibers (3) can be determined and the position of the welding torch (2) with respect to the reference position of the shape where the fibers (3) are connected can be measured instantaneously. All of the mentioned parameter values and the position information are processed and used for quality control.

According to the present invention, the Fiber Bragg grating position sensor is implemented in welding quality control, the welding quality is controlled by monitoring the position of the electrode relative to the work piece and other parameters during welding operation over the work piece (1), and the position detection is performed by the fiber bragg grating method.

The welding operations are performed according to standards after the system is implemented and the quality levels are recorded by examining the obtained joints through destructive/non-destructive testing methods. Thus, a relation between the weld quality and the parameter values and the time-based spatial position of the welding torch (2) is obtained. Therefore, all welding operations that will be performed henceforth can be directly evaluated based on this relationship.

The proposed system has the functionality to control the quality of all the welding operations performed by the machine with very low costs. By implementing the proposed system, both the labor time (stopping the welding operation on the defective part since the control is performed during the welding operation) and the quality control costs will be lowered. The proposed system can also be used in the training of welding operators.

## Claims

1. Welding process control system comprising;
• a torch
• a current-voltage sensor (5), a wire feeding unit (7) and speed sensor, a gas tank (10) and gas flow rate sensor, and a cable connected to torch (2), the system being further **characterised by** the following features :
• fiber bragg grating based optical sensors (3), said fiber bragg grating based optical sensors (3) comprising at least three core optical fibers (3) produced by fiber Bragg grating method to measure three dimensional elongation levels, the at least three fibers being mounted on the torch (2) and directly on the cable (5),
• shape detecting sensor system (4) adapted to detect the spatial position of the torch (2) by shape detection, the sensor system (4) comprising a light source for providing a wide spectrum light having different wavelengths to be projected on the fibers (3) of the optical sensors (3) and a shape detection sensing device (4) measuring the reflected wavelengths and mathematically finding the extend of the change in the reflectivity indices of the optical fibers (3) so that the elongation of the fibers (3) and the position of the welding torch with respect to a reference position of the shape where the fibers (3) are connected can be measured and determined instantaneously
. computer (6) used for collection, evaluation and real-time feed-back of weld parameters and torch position data, wherein the computer (6) is adapted to detect weld quality instantaneously on each weld point by recording time-based position (11) of the torch (2) together with the current, voltage, gas flow rate and wire speed and to continuously monitor the weld quality depending on the time-based position of the torch (2) with respect to the work piece (1) through the fiber bragg grating sensors (3) that are mounted on the weld torch (2) which directly affects the weld quality.

2. Welding process control system according to Claim 1, **characterized in that** the computer (6) is adapted to record motions of the torch (2) along with the current, voltage, gas flow rate and wire speed parameters that affect manual welding performance, that can guide the operator by using one or more of the sensing methods such as visual, audio or tactile methods and, that can improve the welding quality.

3. Use of Welding process control system according to claim 1 comprising steps of
• Sending partial reflection of the wide spectrum light on, at least three or three core optical fibers (3) produced by Fiber Bragg Grating method due to the reflectivity indices of the fibers (3) that change under stress in order to measure the elongation in three dimensions mounted on the torch cable,
• Mathematically finding to what extend the reflectivity indices of the fibers (3) change by measuring the reflected wave lengths by the shape detection sensing device (4),
• based on this, real-time measuring the position (11) of the weld torch (2) with respect to the work piece coordinate axis (12) relative to reference coordinate axis (13) of the fibers (3) by detecting the elongation which the fibers subjected (3),
• Recording all said weld parameter values and position information into the computer (6).

## Patentansprüche

1. Schweißprozess-Steuersystem umfassend;
• ein Schweißbrenner
• einen Strom-Spannungssensor (5), eine Drahtzuführeinheit (7) und einen Geschwindigkeitssensor, einen Gastank (10) und einen Gasdurchflussratesensor und ein mit dem Schweißbrenner (2) verbundenes Kabel, das System ist ferner durch die folgenden Merkmale gekennzeichnet:
• auf einem Faser-Bragg-Gitter basierende optische Sensoren (3), die genannte auf einem Faser-Bragg-Gitter basierende optische Sensoren (3) umfassen mindestens drei optische Kernfasern (3), die durch ein Faser-Bragg-Gitterverfahren hergestellt werden, um dreidimensionale Dehnungsniveaus zu messen, die mindestens drei Fasern sind auf dem Schweißbrenner (2) und direkt auf dem Kabel (5) montiert,
• Formerfassungs-Sensorsystem (4), das dazu geeignet ist, die räumliche Position des Schweißbrenners (2) durch Formerfassung zu erfassen, das Sensorsystem (4) eine Lichtquelle zum Vorsehen eines Breitspektrumlichts mit unterschiedlichen Wellenlängen, das auf die Fasern (3) der optischen Sensoren (3) zu projektieren ist, und eine Formerfassungs-Sensorvorrichtung (4) umfasst, die die reflektierten Wellenlängen misst und mathematisch das Ausmaß der Änderung der Reflexionsindizes der optischen Fasern (3) ermittelt, so dass die Dehnung der Fasern (3) und die Position des Schweißbrenners in Bezug auf eine Referenzposition der Form, in der die Fasern (3) verbunden sind, sofort gemessen und bestimmt werden kann,
Computer (6), der für die Sammlung, Auswertung und Echtzeit-Rückmeldung von Schweißparametern und Schweißbrennerpositionsdaten verwendet wird, wobei der Computer (6) geeignet ist, die Schweißqualität sofort an jedem Schweißpunkt durch Aufzeichnung der zeitbasierten Position (11) des Schweißbrenners (2) zusammen mit dem Strom, der Spannung, der Gasdurchflussrate und der Drahtgeschwindigkeit zu erfassen und die Schweißqualität in Abhängigkeit von der zeitbasierten Position des Schweißbrenners (2) in Bezug auf das Werkstück (1) durch die Faser-Bragg-Gitter-Sensoren (3), die an dem Schweißbrenner (2) montiert sind, kontinuierlich zu überwachen, was sich direkt auf die Schweißqualität auswirkt.

2. Schweißprozess-Steuersystem nach Anspruch 1, **dadurch gekennzeichnet, dass** der Computer (6) angepasst ist, um Bewegungen des Schweißbrenners (2) zusammen mit den Strom-, Spannungs-, Gasdurchfluss- und Drahtgeschwindigkeitsparametern aufzuzeichnen, die die manuelle Schweißleistung bewirken, die den Bediener durch Verwendung eines oder mehrerer der Sensorverfahren, wie visuelle, akustische oder taktile Verfahren, führen können und die die Schweißqualität verbessern können.

3. Verwendung eines Schweißprozess-Steuersystems nach Anspruch 1, das folgende Schritte umfasst
• Senden einer Teilreflexion des Lichts mit breitem Spektrum an mindestens drei oder drei optischen Kernfasern (3), die durch die Faser-Bragg-Gitterverfahren hergestellt werden, aufgrund der Reflexionsindizes der Fasern (3), die sich unter Belastung ändern, um die Dehnung in drei Dimensionen zu messen, die auf dem Schweißbrenner-Kabel montiert sind,
• Mathematische Ermittlung, in wie weit sich die Reflexionsindizes der Fasern (3) durch Messung der reflektierten Wellenlängen mit der Formerfassungs-Sensorvorrichtung (4) ändern, darauf basierend, Echtzeitmessung der Position (11) des Schweißbrenners (2) in Bezug auf die Werkstück-Koordinatenachse (12) relativ zur Referenz-Koordinatenachse (13) der Fasern (3) durch Erfassung der Dehnung, der die Fasern (3) ausgesetzt sind,
• Aufzeichnung aller genannten Schweißparameterwerte und Positionsinformationen in den Computer (6).

## Revendications

1. Système de commande de processus de soudage comprenant ;
• une torche
• un capteur courant-tension (5), une unité d'alimentation en fil (7) et un capteur de vitesse, un réservoir de gaz (10) et un capteur de débit de gaz, et un câble relié à la torche (2), le système étant en outre **caractérisé par** les caractéristiques suivantes :
• capteurs optiques (3) basés sur des réseaux de Bragg sur fibre, lesdits capteurs optiques (3) basés sur des réseaux de Bragg sur fibre comprenant au moins trois fibres optiques de cœur (3) produites par un procédé de réseau de Bragg sur fibre pour mesurer des niveaux d'allongement tridimensionnels, les au moins trois fibres étant montées sur la torche (2) et directement sur le câble (5),
• système de capteur de détection de forme (4) adapté pour détecter la position spatiale de la torche (2) par détection de forme, le système de capteur (4) comprenant une source de lumière pour fournir une lumière à large spectre ayant différentes longueurs d'onde à projeter sur les fibres (3) des capteurs optiques (3) et un dispositif de détection de forme (4) mesurant les longueurs d'onde réfléchies et trouvant mathématiquement l'étendue de la variation des indices de réflectivité des fibres optiques (3) de sorte que l'allongement des fibres (3) et la position de la torche de soudage par rapport à une position de référence de la forme où les fibres (3) sont connectées peuvent être mesurées et déterminées instantanément ; ordinateur (6) utilisé pour la collecte, l'évaluation et la rétroaction en temps réel des paramètres de soudage et des données de position de la torche, dans lequel l'ordinateur (6) est adapté pour détecter la qualité de la soudure instantanément sur chaque point de soudure en enregistrant la position (11) de la torche (2) en fonction du temps ainsi que le courant, la tension, le débit de gaz et la vitesse du fil et pour surveiller en continu la qualité de la soudure en fonction de la position temporelle de la torche (2) par rapport à la pièce (1) par l'intermédiaire des capteurs (3) à réseau de bragg de fibres qui sont montés sur la torche de soudage (2) et qui influent directement sur la qualité de la soudure.

2. Système de commande de processus de soudage selon la revendication 1, **caractérisé en ce que** l'ordinateur (6) est adapté pour enregistrer les mouvements de la torche (2) ainsi que les paramètres de courant, de tension, de débit de gaz et de vitesse du fil qui affectent la performance de soudage manuel, qui peut guider l'opérateur en utilisant une ou plusieurs des méthodes de détection telles que les méthodes visuelles, audio ou tactiles et, qui peut améliorer la qualité du soudage.

3. Utilisation d'un système de commande de processus de soudage selon la revendication 1 comprenant les étapes suivantes
• Envoyer une réflexion partielle de la lumière à large spectre sur au moins trois ou trois fibres optiques de cœur (3) produites par le procédé Fiber Bragg Grating en raison des indices de réflectivité des fibres (3) qui varient sous contrainte afin de mesurer l'allongement dans les trois dimensions montées sur le câble de torche,
• Trouver mathématiquement jusqu'à quel point les indices de réflectivité des fibres (3) changent en mesurant les longueurs d'onde réfléchies par le dispositif de détection de forme (4), sur la base de cette, en mesurant en temps réel de la position (11) de la torche de soudage (2) par rapport à l'axe de coordonnées (12) de la pièce d'oeuvre par rapport à l'axe de coordonnées de référence (13) des fibres (3) en détectant l'allongement auquel les fibres (3) ont été soumises,
• Enregistrer dans l'ordinateur (6) toutes les valeurs des paramètres de soudage et des informations de position.
